(19) Europäisches Patentamt
European Patent Office
Office européen des brevets

(11) **EP 4 195 524 A1**

(12) **EUROPEAN PATENT APPLICATION**

(43) Date of publication:
**14.06.2023 Bulletin 2023/24**

(21) Application number: **21217214.2**

(22) Date of filing: **23.12.2021**

(51) International Patent Classification (IPC):
*H04B 7/0456* (2017.01)

(52) Cooperative Patent Classification (CPC):
H04B 7/0456

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2021 TW 110146504**

(71) Applicant: **Industrial Technology Research Institute**
**310401 Hsinchu (TW)**

(72) Inventors:
• **CHEN, Sau-Gee**
  **Hsinchu City (TW)**
• **GAO, Guo Feng**
  **Taoyuan City (TW)**
• **CHAN, Kun Lin**
  **Taipei City (TW)**
• **CHEN, Shi-Yang**
  **Hsinchu City (TW)**

(74) Representative: **Patentship**
**Patentanwaltsgesellschaft mbH**
**Elsenheimerstraße 65**
**80687 München (DE)**

(54) **METHOD AND ELETRONIC DEVICE FOR GENERATING CODEBOOK BASED ON DISCRETE COSINE TRANSFORM**

(57)      A method for generating a codebook based on discrete cosine transform, suitable for an electronic device with a plurality of antennas, includes generating an identity matrix, the size of the identity matrix is related to the number of the antennas of the electronic device; inputting a plurality of column vectors of the identity matrix into a discrete cosine transform formula to calculate a plurality of codeword elements corresponding to the column vectors; generating a plurality of codeword corresponding to the column vectors, the codewords corresponding to the column vectors includes the codeword elements corresponding to the column vectors; multiplying the codewords by a coefficient related to the number of antennas; determining whether the calculation of all such codewords has been completed; and completing the codebook.

generating an identity matrix; wherein the size of the identity matrix is related to the number of the antennas of the electronic device ~ S100

inputting a plurality of column vectors of the identity matrix into a discrete cosine transform formula to calculate a plurality of codeword elements corresponding to the column vectors ~ S102

generating a plurality of codewords corresponding to the column vectors; wherein the codewords corresponding to the column vectors comprises the codeword elements corresponding to the column vectors ~ S104

multiplying the codewords by a coefficient related to the number of the antennas ~ S106

S108 determining whether the calculation of all the codewords has been completed — No

Yes

completing the codebook ~ S110

FIG. 1

**Description**

[Technical Field]

The present invention is related to communication precoding method, and in particular it is related to a method and an electronic device for generating codebook based on a discrete cosine transform.

[Prior **Art**]

In the future, increased data traffic will pose a huge challenge to the existing terrestrial network. Satellite communication systems are expected to have the capability to provide high data rates by operating in high frequency bands, which will be much higher than the bands currently used by the existing terrestrial communications. Low earth orbit (LEO) satellite communications, with orbits at altitudes from 500 to 2000 km, have recently attracted interest from the research and industrial communities due to its lower latency, path loss, and production and launching costs compared to geostationary earth orbit (GEO) and medium earth orbit (MEO) satellite communications.

For a feeder link in the LEO communication systems (i.e. the communication link between a LEO satellite and a gateway on the earth), antenna arrays equipped at both the satellite and the earth station can help increase capacity without addition frequency resources, thereby substantially increasing spectral efficiency. Conventionally, with MIMO antenna arrays applied at the LEO satellite and gateway on the earth, the beamforming techniques can make the power of the signal focus on certain directions, which helps improve spectral efficiency.

However, fully digital beamforming needs dedicated baseband and RF hardware for each antenna element, which leads to high costs and high power consumption when the number of antennas is large. It is therefore of critical importance to design low-complexity transmitter/receiver beamforming methods, particularly in the energy-scarce satellite systems.

[Summary of Invention]

According to a method for generating a codebook based on a discrete cosine transform of the present invention, which is suitable for an electronic device with a plurality of antennas, the method includes generating an identity matrix, the size of the identity matrix is related to the number of antennas of the electronic device; inputting a plurality of column vectors of the identity matrix into a discrete cosine transform formula to calculate a plurality of codeword elements corresponding to the column vectors; generating a plurality of codewords corresponding to the column vectors, the codewords corresponding to the column vectors comprise the codeword elements corresponding to the column vectors; multiplying the codewords by a coefficient related to the number of antennas; determining whether the calculation of all the codewords has been completed; and completing the codebook.

According to the method above, the discrete cosine transform formula is:

$$X_{i,k} = \frac{1}{2}\left(x_{i,0} + (-1)^k x_{i,N-1}\right) + \sum_{n=1}^{N-2} x_{i,n} \cos\left[\frac{\pi k n}{N-1}\right] \text{ or } X_{i,k} = \sum_{n=0}^{N-1} x_{i,n} \cos\left[\frac{\pi k(2n+1)}{2N}\right]$$

. $N$ is the number of antennas of the electronic device; $X_{i,k}$ is the i-th codeword element of the k-th codeword; $k$ is the index of the codewords, $k = 0,1, 2, ..., N - 1$; $i$ is the index of the codeword elements in one of the codewords, $i = 0,1, 2, ..., N - 1$; $x_{i,n}$ is the element in the n-th column and i-th row of the identity matrix.

According to the method above, the coefficient related to the number of antennas is: $C = \frac{1}{\sqrt{N}}$. C is the coefficient, and $N$ is the number of antennas of the electronic device.

According to the method above, the step of determining whether the calculation of all the codewords has been completed, includes: determining that the calculation of all the codewords has been completed when $k$ is equal to $N - 1$ and the calculation for i = 0~$N$ - 1 is completed.

According to the method above, the method further includes: using a matching algorithm to select a codeword in the codebook based on a discrete cosine transform; using the codeword to generate a radio frequency precoding matrix, wherein the codeword is used as a column vector of the radio frequency precoding matrix; encoding radio frequency signals transmitted by the antennas of the electronic device based on the radio frequency precoding matrix; and transmitting the radio frequency signals through the antennas of the electronic device.

According to the method above, the matching algorithm is an Orthogonal Matching Pursuit (OMP) algorithm.

According to the method above, the matching algorithm selects the codeword based on channel state information between the electronic device and another electronic device.

According to the method above, the method further includes: calculating the least square value of the codeword to generate a baseband precoding matrix, wherein the codeword after taking the least square value is used as a column vector of the baseband precoding matrix; and precoding baseband digital signals based on the baseband precoding matrix.

According to an electronic device including a plurality of antennas and a processor, the antennas are configured to transmit radio frequency signals. The processor is configured to execute the following steps: generating an identity matrix, the size of the identity matrix is related to the number of antennas of the electronic device; inputting a plurality of column vectors of the identity matrix into a discrete cosine transform formula to calculate a plurality of codeword elements corresponding to the column vectors; generating a plurality of codewords corresponding to the column vectors, the codewords corresponding to the column vectors comprise the codeword elements corresponding to the column vectors; multiplying the codewords by a coefficient related to the number of antennas; determining whether the calculation of all the codewords has been completed; and completing the codebook. The processor controls the antennas to transmit the radio frequency signals.

According to the electronic device above, the processor is configured to execute further including: using a matching algorithm to select a codeword in the codebook based on a discrete cosine transform; using the codeword to generate a radio frequency precoding matrix, the codeword is used as a column vector of the radio frequency precoding matrix; encoding radio frequency signals transmitted by the antennas of the electronic device based on the radio frequency precoding matrix; and transmitting the radio frequency signals through the antennas of the electronic device.

According to the electronic device above, the matching algorithm is an Orthogonal Matching Pursuit (OMP) algorithm.

According to the electronic device above, the matching algorithm selects the codeword based on channel state information between the electronic device and another electronic device.

According to the electronic device above, the processor is configured to execute further including: calculating the least square value of the codeword to generate a baseband precoding matrix, the codeword after taking the least square value is used as a column vector of the baseband precoding matrix; and precoding baseband digital signals based on the baseband precoding matrix.

According to the electronic device above, the discrete cosine transform formula is:

$$X_{i,k} = \frac{1}{2}\left(x_{i,0} + (-1)^k x_{i,N-1}\right) + \sum_{n=1}^{N-2} x_{i,n} \cos\left[\frac{\pi k n}{N-1}\right] \text{ or } X_{i,k} = \sum_{n=0}^{N-1} x_{i,n} \cos\left[\frac{\pi k (2n+1)}{2N}\right].$$

$N$ is the number of antennas of the electronic device; $X_{i,k}$ is the i-th codeword element of the k-th codeword; $k$ is the index of the codewords, $k$ = 0,1, 2, ..., $N$ - 1; i is the index of the codeword elements in one of the codewords, $i$ = 0,1, 2, ..., $N$ - 1; $x_{i,n}$ is the element in the n-th column and i-th row of the identity matrix.

According to the electronic device above, the coefficient related to the number of antennas is: $C = \frac{1}{\sqrt{N}}$. C is the coefficient, and $N$ is the number of antennas of the electronic device.

According to the electronic device above, when $k$ is equal to $N$ - 1 and the processor has finished the calculation for i = 0~$N$ - 1, the processor determines that the calculation of all the codewords has been completed.

[Brief description of figures]

Fig. 1 is a flow chart of a method for generating a codebook based on a discrete cosine transform in accordance with some embodiments of the present invention.

Fig. 2 is a schematic diagram of an electronic device for generating a codebook based on a discrete cosine transform in accordance with some embodiments of the present invention.

Fig. 3 is a schematic diagram of the relative positions of an electronic device and another electronic device during communication with each other in accordance with some embodiments of the present invention.

Fig. 4 is a comparison diagram of spectrum efficiency when using a codebook based on a discrete cosine transform and other codebooks for communication in accordance with some embodiments of the present invention.

Fig. 5 is a comparison diagram of the number of matrix multiplications when using a codebook based on a discrete cosine transform and other codebooks for communication in accordance with some embodiments of the present invention.

[Implementation]

The present invention is described with reference to the accompanying drawings, wherein like reference numerals designate similar or identical elements throughout. The above drawings are not drawn to actual scale, but merely provide an illustration of the present invention. Some of the disclosed aspects are described below as references for illustrating exemplary applications. This means that many specific details, relationships and methods are explained to provide complete understanding of the present invention. Anyway, one having ordinary knowledge in the relevant art will recognize that the present invention may be practiced without one or more of the specific details or otherwise.

In other instances, well-known structures or operations are not listed in detail to avoid obscuring this disclosure. This disclosure is not limited by the sequence of acts or events set forth, as some acts may occur in a different sequence or concurrently with other acts or events. Furthermore, not all stated acts or events need to be performed in the same manner as the present disclosure.

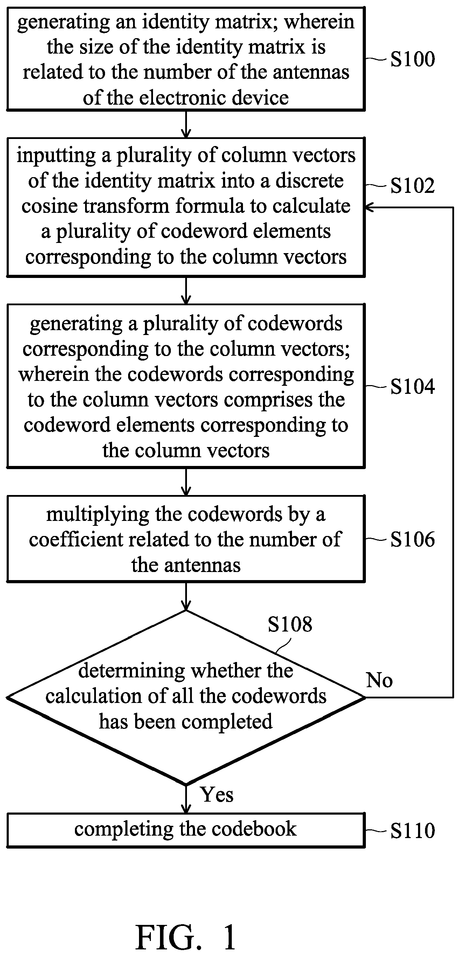

Fig. 1 is a flow chart of a method for generating a codebook based on a discrete cosine transform in accordance with some embodiments of the present invention. In some embodiments, the method of present invention is suitable for an electronic device having a plurality of antennas. In some embodiments, the electronic device can be, for example, a gateway or user equipment (UE) on the earth in satellite communication, and the electronic device can also be a communication satellite in satellite communication, but the present invention is not limited thereto. As shown in Fig. 1, the method for generating a code book based on a discrete cosine transform includes: generating an identity matrix, the size of the identity matrix is related to the number of antennas of the electronic device (step S100); inputting a plurality of column vectors of the identity matrix into a discrete cosine transform formula to calculate a plurality of codeword elements corresponding to the column vectors (step S102); generating a plurality of codewords corresponding to the column vectors, the codewords corresponding to the column vectors comprise the codeword elements corresponding to the column vectors (step S104); multiplying the codewords by a coefficient related to the number of antennas (step S106); determining whether the calculation of all the codewords has been completed (step S108); and completing the codebook (step S110). When the method of the present invention determines in step S108 that the calculation of all codewords has not been completed, the method of the present invention returns to step S102. When the method of the present invention determines in step S108 that the calculation of all codewords has been completed, the method of the present invention may continue to perform step S 110.

In some embodiments, when the electronic device applicable to the method of the present invention includes N*N antennas (for example, an array antenna), the size of the identity matrix in step S100 is also N*N. Then, in step S102, the method of the present invention inputs a plurality of column vectors of the identity matrix into a discrete cosine transform formula to calculate a plurality of codeword elements corresponding to the column vectors. In some embodiments, the discrete cosine transform formula can be expressed by the following formula 1 and formula 2.

$$X_{i,k} = \frac{1}{2}\left(x_{i,0} + (-1)^k x_{i,N-1}\right) + \sum_{n=1}^{N-2} x_{i,n} \cos\left[\frac{\pi k n}{N-1}\right] \quad \text{formula 1}$$

$$X_{i,k} = \sum_{n=0}^{N-1} x_{i,n} \cos\left[\frac{\pi k(2n+1)}{2N}\right] \quad \text{formula 2}$$

In formulas 1 and 2, $N$ is the number of antennas of the electronic device applicable to the method of the present invention; $X_{i,k}$ is the i-th codeword element of the k-th codeword; $k$ is the index of the codewords, $k = 0, 1, 2, ..., N - 1$; i is the index of the codeword elements in one of the codewords, $i = 0, 1, 2, ..., N - 1$; $x_{i,n}$ is the element in the n-th column and i-th row of the identity matrix.

Table 1 is a schematic table of the codebook obtained according to the method of the present invention.

| codebook | | | | |
|---|---|---|---|---|
| $Cw_0$ | ... | $Cw_k$ | ... | $Cw_{N-1}$ |

In table 1, $w_0$, $w_k$ and $w_{N-1}$ are 3 of N codewords in the codebook. For example, the codeword $w_k$ can be:

$$w_k = \left[\frac{1}{2}, \cos\left(\frac{\pi k}{N-1}\right), \cos\left(\frac{2\pi k}{N-1}\right), ..., \cos\left(\frac{(N-2)\pi k}{N-1}\right), \frac{1}{2}(-1)^k\right]^T \quad \text{formula 3}$$

In formula 3, $\frac{1}{2}$, $\cos\left(\frac{\pi k}{N-1}\right)$, $\cos\left(\frac{2\pi k}{N-1}\right)$, and $\frac{1}{2}(-1)^k$ are 4 codeword elements among N codeword elements included in the codeword $w_k$. In other words, in step S102, the method of the present invention can obtain the codeword elements corresponding to each codeword in the codebook according to formula 1 and formula 2, and obtain each codewords in the codebook in step S104. In some embodiments, the codeword $w_0$ corresponds to the column vector of the first column of the identity matrix in step S100, and the codeword $w_k$ corresponds to the column vector of the (k+1)-th column of the identity matrix in step S100. Similarly, in the codeword $w_k$, referring to formula 3, the codeword element $\frac{1}{2}$ corresponds to the first element in the column vector of the (k+1)-th column of the identity matrix in step S100. The codeword element $\cos\left(\frac{\pi k}{N-1}\right)$ corresponds to the second element in the column vector of the (k+1)-th column of the identity matrix in step S100, and so on.

Then, in step S106, the method of the present invention multiplies the codewords (for example, the codewords $w_0$, $w_k$ and $w_{N-1}$ in table 1) by a coefficient related to the number of antennas, such as a coefficient C, as shown in formula 4.

$$C = \frac{1}{\sqrt{N}} \quad \text{formula 4}$$

After that, in step S108, the method of present invention determines whether the calculation of all the codewords has been completed. In some embodiments, the method of the present invention determines that the calculation of all the codewords has been completed when k is equal to N - 1(that is, the calculation for k=0~N has been finished) and the calculation for i = 0~N - 1 is completed. Then, the method of the present invention approaches to step S110 to obtain the codebook as shown in table 1. When the method of the present invention determines that the calculation of all codewords has not been completed in step S108, the method of the present invention returns to step S102 to continue the calculation of the codeword elements.

After obtaining the codebook as shown in table 1, the method of the present invention further uses the obtained codebook to perform the following steps: using a matching algorithm to select a codeword in the codebook based on a discrete cosine transform; using the codeword to generate a radio frequency precoding matrix, the codeword is used as a column vector of the radio frequency precoding matrix; and transmitting the radio frequency signals through the antennas of the electronic device. In some embodiments, the matching algorithm is an Orthogonal Matching Pursuit (OMP) algorithm, but the present invention is not limited thereto. In some embodiments, the matching algorithm selects the codeword from the codebook obtained by the method of the present invention based on channel state information between the electronic device and another electronic device.

After obtaining the codebook as shown in table 1, the method of the present invention further uses the obtained codebook to perform the following steps: calculating the least square value of the codeword to generate a baseband precoding matrix, the codeword after taking the least square value is used as a column vector of the baseband precoding matrix; and precoding baseband digital signals based on the baseband precoding matrix.

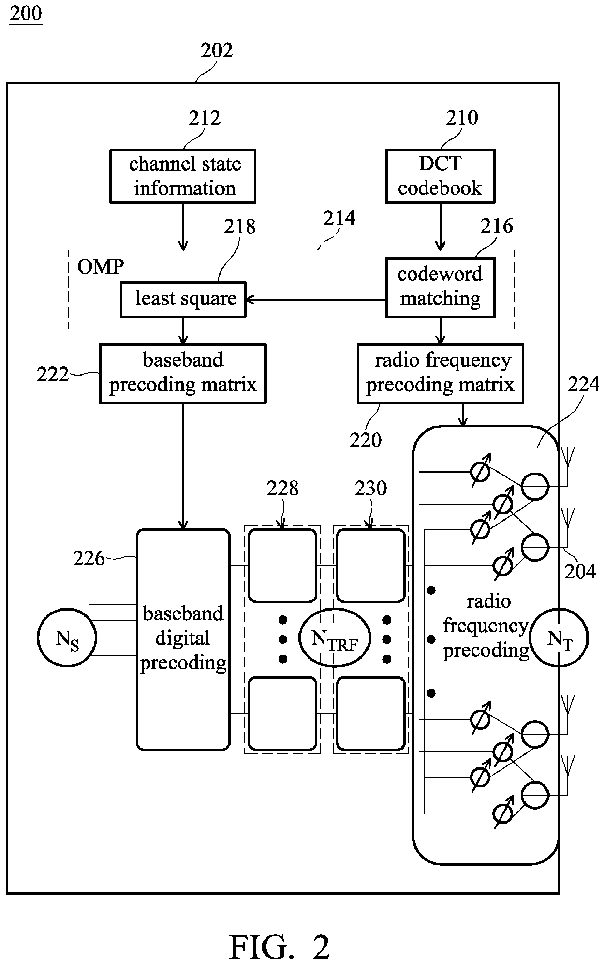

Fig. 2 is a schematic diagram of an electronic device 200 for generating a codebook based on a discrete cosine transform in accordance with some embodiments of the present invention. As shown in Fig. 2, the electronic device 200 includes a processor 202 and a plurality of antennas 204. The antennas 204 are configured to transmit radio frequency signals from the processor 202. The processor 202 is configured to generate an identity matrix, the size of the identity matrix is related to the number of antennas 204 of the electronic device 200 (step S100 in Fig. 1); input a plurality of column vectors of the identity matrix into a discrete cosine transform formula to calculate a plurality of codeword elements corresponding to the column vectors (step S102 in Fig. 1); generate a plurality of codewords corresponding to the column vectors, the codewords corresponding to the column vectors includes the codeword elements corresponding to the column vectors (step S104 in Fig. 1); multiply the codewords by a coefficient related to the number of antennas (step S106 in Fig. 1); determine whether the calculation of all the codewords has been completed (step S108 in Fig. 1); and complete the (DCT) codebook 210 (step S110 in Fig. 1). The processor 202 controls the antennas 204 to transmit the radio frequency signals.

In some embodiments, the processor 202 executes the calculations of formula 1 and formula 2 to obtain the codeword elements corresponding to the column vectors of the identity matrix. The processor 202 executes the calculation of formula 4 to obtain all the codewords included in the codebook 210. After the processor 202 obtains the codebook 210, then the processor 202 executes a matching algorithm to complete the functions of codeword matching 216 and taking the least square value 218. In some embodiments, the matching algorithm executed by the processor 202 is an Orthogonal Matching Pursuit (OMP) algorithm, but the present invention is not limited thereto. In some embodiments, the processor 202 executes the orthogonal matching pursuit algorithm 214 to select a codeword (that is, the function block of the codeword matching 216) in the codebook 210 based on the discrete cosine transform. Then, the processor 202 uses the selected codeword to generate a radio frequency precoding matrix 220. In some embodiments, the selected codeword is used as the column vector of the radio frequency precoding matrix 220.

In some embodiments, the orthogonal matching pursuit algorithm 214 selects the codeword based on channel state information 212 between the electronic device 200 and another electronic device (not shown). Then, the processor 202 encodes the radio frequency signals transmitted by the antennas 204 of the electronic device 200 based on the radio frequency precoding matrix 220 (that is, the function block of the radio frequency precoding 224). The processor 202 finally transmits the radio frequency signals to another electronic device through the antennas 204 of the electronic device 200. In some embodiments, the processor 202 further calculates the least square value of the selected codeword (that is, the function block of the least square 218) to generate a baseband precoding matrix 222. The codeword after taking the least square is used as the column vector of the baseband precoding matrix 222. After that, the processor 202 pre-codes the baseband digital signal based on the baseband precoding matrix 222 (that is, the function block of the base band digital precoding 226).

In some embodiments, the processor 202 performs the function of baseband digital precoding 226 on $N_S$ baseband data streams (BB data streams). The baseband data streams after the baseband digital precoding 226 is distributed to the $N_{TRF}$ radio frequency links. Each of the radio frequency links includes a digital-to-analog converter 228 and a radio frequency processing circuit 230. The digital-to-analog convertor 228 can convert the baseband data stream into an analog signal, and the analog signal is filtered or amplified by the radio frequency processing circuit 230. Finally, the analog signal enters the function block of the radio frequency precoding 224, and is output by the antennas 204 after the analog precoding. In some embodiments, the electronic device 200 includes $N_T$ antennas 204 for transmitting the analog signal after the analog precoding to another electronic device.

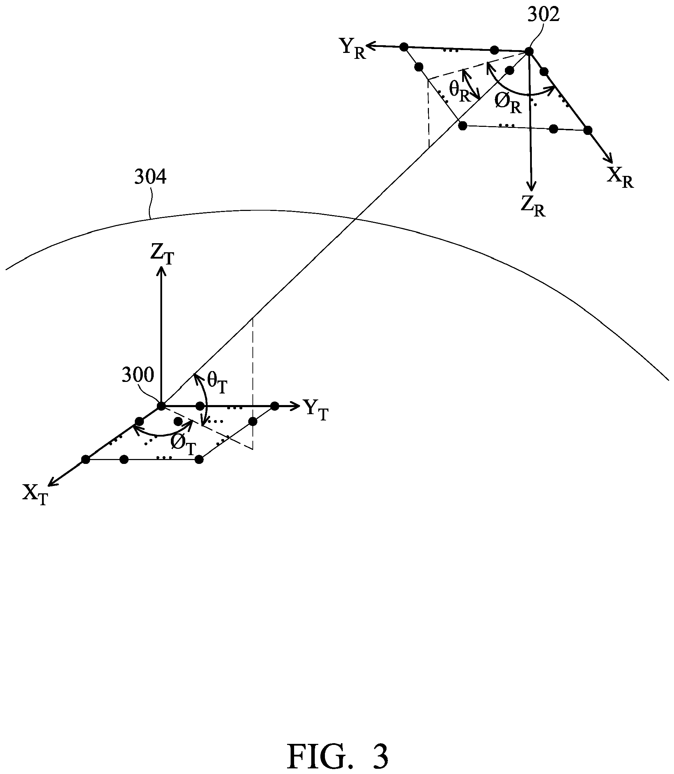

Fig. 3 is a schematic diagram of the relative positions of an electronic device 300 and another electronic device 302 during communication with each other in accordance with some embodiments of the present invention. As shown in Fig. 3, the electronic device 300 is installed on the surface 304 of the earth, and the electronic device 302 is installed in the atmosphere or space away from the surface 304 of the earth. In some embodiments, the electronic device 300 may be a gateway or user equipment (UE) on the earth, and the electronic device 302 may be a communication satellite. In the embodiment of Fig. 3, when the electronic device 300 or the antennas of the electronic device 300 is set at the origin of the coordinate system $(X_T, Y_T, Z_T)$, from the perspective of the line of sight of the electronic device 300, the electronic device 302 is located at the elevation angle $\theta_T$ and the azimuth angle $\varphi_T$ of the electronic device 300. Similarly, when the electronic device 302 or the antennas of the electronic device 302 is set at the origin of the coordinate system $(X_R, Y_R, Z_R)$, from the perspective of the line of sight of the electronic device 302, the electronic device 300 is located at the depression angle $\theta_R$ and the azimuth angle $\varphi_R$ of the electronic device 302. In the embodiment of Fig. 3, the electronic device 300 is the transmitting end, and the electronic device 302 is the receiving end.

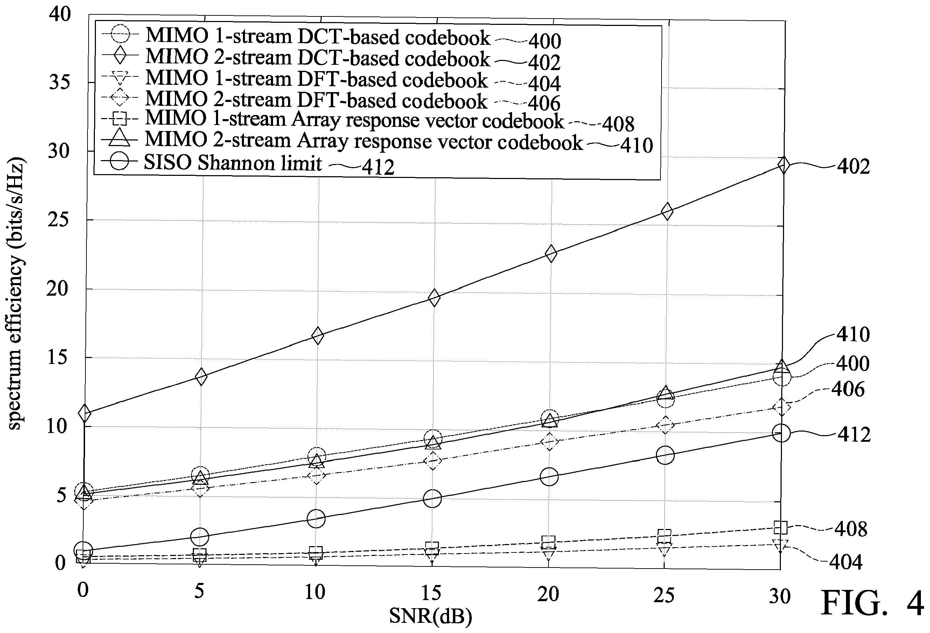

Fig. 4 is a comparison diagram of spectrum efficiency when using a codebook based on a discrete cosine transform and other codebooks for communication in accordance with some embodiments of the present invention. Fig. 4 is a diagram showing the relationship between the obtained average spectral efficiency and the signal-to-noise ratio corresponding to different depression angles $\theta_R$ and azimuth angles $\varphi_R$ when the electronic device 302 in Fig. 3 performs downlink transmission to the electronic device 300. Referring to Figs. 3 and 4 at the same time, the horizontal axis of Fig. 4 is the signal-to-noise ratio (SNR), which represents the strength of the communication signal between the electronic device 300 and the electronic device 302. The vertical axis in Fig. 4 is the spectrum efficiency, which represents the total amount of data that can be transmitted under the limitation of a fixed bandwidth for the communication between the electronic device 300 and the electronic device 302. When the electronic device 300 and the electronic device 302 both use multiple input multiple output (MIMO) system antennas, and the electronic device 300 pre-codes one data stream according to the codebook 210 of the present invention, the relationship between the spectrum efficiency and SNR from the line segment 400 can be obtained. When the electronic device 300 and the electronic device 302 both use MIMO system antennas, and the electronic device 300 pre-codes two data streams according to the codebook 210 of the present invention, the relationship between the spectrum efficiency and SNR from the line segment 402 can be obtained. The codebook 210 of the present invention is a codebook based on a discrete cosine transform (DCT).

When the electronic device 300 and the electronic device 302 both use MIMO system antennas, and the electronic device 300 pre-codes one data stream according to the existing codebook based on Discrete Fourier Transform (DFT), the relationship between the spectrum efficiency and SNR from the line segment 404 can be obtained. When the electronic device 300 and the electronic device 302 both use MIMO system antennas, and the electronic device 300 pre-codes two data streams according to the existing codebook based on DFT, the relationship between the spectrum efficiency and SNR from the line segment 406 can be obtained. When the electronic device 300 and the electronic device 302 both use MIMO system antennas, and the electronic device 300 pre-codes one data stream according to the existing codebook based on array response vectors, the relationship between the spectrum efficiency and SNR from the line segment 408 can be obtained. When the electronic device 300 and the electronic device 302 both use MIMO system antennas, and the electronic device 300 pre-codes two data streams according to the existing codebook based on array response vectors, the relationship between the spectrum efficiency and SNR from the line segment 410 can be obtained. When the electronic device 300 and the electronic device 302 both use single input a single output (SISO) system antenna, and the data stream is pre-coded according to the existing noise channel side code theorem, the relationship between the spectrum efficiency and SNR from the line segment 412 can be obtained. In the embodiment of Fig. 4, the line segment 412 is used as a comparison sample of other line segments.

As shown in Fig. 4, when the electronic device 300 and the electronic device 302 both use MIMO system antennas, and the electronic device 300 pre-codes one data stream (for example, line segments 400, 404 and 408), the line segment 400 based on the DCT codebook of the present invention can obtain the highest spectrum efficiency under the same SNR. Similarly, when the electronic device 300 and the electronic device 302 both use MIMO system antennas, and the electronic device 300 pre-codes two data streams (for example, line segments 402, 406 and 410), the line segment 402 based on the DCT codebook of the present invention can obtain the highest spectrum efficiency under the same SNR. In other words, using the present invention to pre-code radio frequency signals or digital signals based on the DCT codebook can achieve higher spectrum efficiency than pre-coding based on DFT or array response vectors.

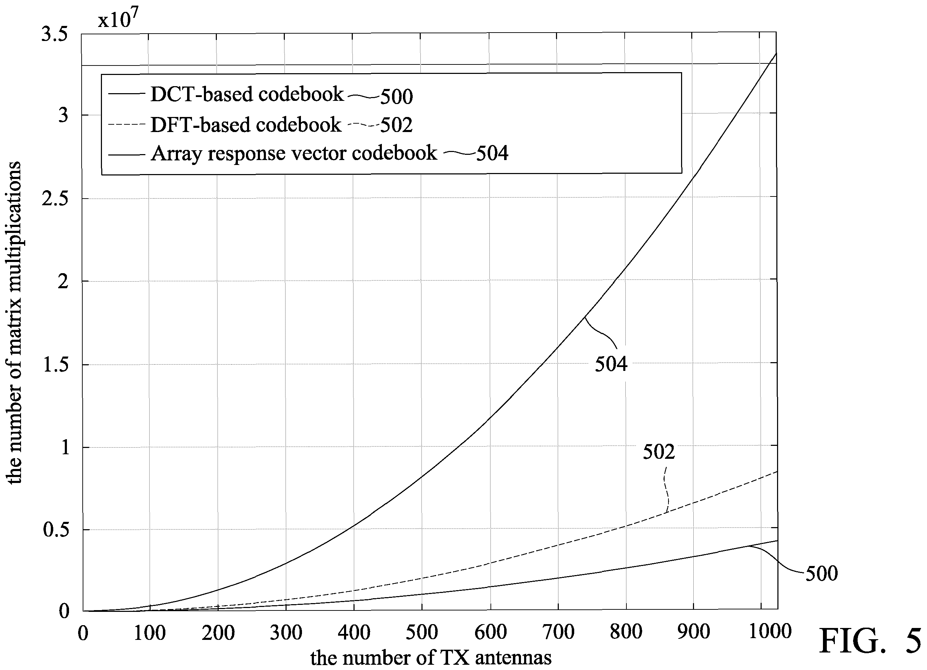

Fig. 5 is a comparison diagram of the number of matrix multiplications when using a codebook based on a discrete cosine transform and other codebooks for communication in accordance with some embodiments of the present invention. Referring to Figs. 3 and 5 at the same time, the horizontal axis in Fig. 5 is the number of transmitting (TX) antennas (that is, the number of antennas 204 in Fig. 2). The vertical axis in Fig. 5 represents the number of matrix multiplications, which represents the number of matrix multiplications that the method and the electronic device 300 of the present invention need to perform when the calculations of formula 1, formula 2, and formula 4 are executed. As shown in Fig. 5, when the electronic device 300 uses the DCT-based codebook of the present invention to pre-code radio frequency signals or digital signals, the relationship from the line segment 500 between the number of matrix multiplications and the number of transmitting antennas can be obtained. When the electronic device 300 uses the DFT-based codebook to pre-code radio frequency signals or digital signals, the relationship from the line segment 502 between the number of matrix multiplications and the number of transmitting antennas can be obtained. When the electronic device 300 uses the codebook based on array response vectors to pre-code radio frequency signals or digital signals, the relationship from the line segment 504 between the number of matrix multiplications and the number of transmitting antennas can be obtained.

As shown in Fig. 5, when the electronic device 300 has the same number of transmitting antennas, the number of matrix multiplications when the electronic device uses the DCT-based codebook of the present invention to calculate formula 1, formula 2, and formula 4 is much lower than that when the electronic device uses the codebook based on DFT or array response vectors.

The method and electronic device of the present invention effectively generate a new codebook for the precoder. A set of orthogonal codewords based on DCT is designed in the codebook, so that when the OMP algorithm is used to search for codewords, the number of matrix multiplications can be greatly reduced, and better spectrum efficiency can be achieved than using existing methods.

While the embodiments of the present invention have been described above, it should be understood that the above presented are examples, not limitations. Many changes to the above-described exemplary embodiments in accordance with this embodiment can be implemented without departing from the spirit and scope of the invention. Accordingly, the breadth and scope of the present invention should not be limited by the above-described embodiments. More specifically, the scope of the present invention should be defined by the following claims and their equivalents.

While the above invention has been illustrated and depicted by one or more relevant implementations, equivalent changes and modifications will occur to others skilled in the art in light of the above specification and drawings. Furthermore, although a particular feature of the embodiments of the invention has been demonstrated by one of the relevant implementations, the above-described feature may be combined with one or more other features as may be required and useful for any known or particular application.

Unless otherwise defined, all terms (including technical or scientific terms) used herein are commonly understood by those of ordinary skill in the art pertaining to the above invention. We should be more aware that the above terms, such as those defined in commonly used dictionaries, should be interpreted as the same in the context of the related art. Unless expressly defined herein, the above terms are not be interpreted in an idealized or overly formal sense.

[Symbol Description]

S100,S102,S104: step

S106,S108,S110: step
200: electronic device
202: processor
204: antennas
210: DCT codebok
212: channel state information
214: orthogonal matching pursuit algorithm
216: codeword matching
218: least square
220: radio frequency precoding matrix
222: baseband precoding matrix
224: radio frequency precoding
226: baseband digital precoding
228: digital-to-analog converter
230: radio frequency processing circuit
$N_s$: the number
$N_{TRF}$, $N_T$: the number
300,302: electronic device
304: surface (of the earth)
$X_T$, $Y_T$, $Z_T$: coordinate system
$X_R$, $Y_R$, $Z_R$: coordinate system  $\theta_T$: elevation angle
$\theta_R$: depression angle
$\varphi_T$, $\varphi_R$: azimuth angle
400,402,404,406,408,410,412: line segment
MIMO_1-stream_DCT-based_codebook: using MIMO antennas, and precoding 1 data stream according to the DCT codebook of the present invention
MIMO_2-stream_DCT-based_codebook: using MIMO antennas, and precoding 2 data streams according to the DCT codebook of the present invention
MIMO_1-stream_DFT-based_codebook: using MIMO antennas, and precoding 1 data stream according to the DFT codebook
MIMO_2-stream_DFT-based_codebook: using MIMO antennas, and precoding 2 data streams according to the DFT codebook
MIMO_1-stream_Array_response_vector_codebook: using MIMO antennas, and precoding 1 data stream according to the array response vector
MIMO_2-stream_Array_response_vector_codebook: using MIMO antennas, and precoding 2 data streams according to the array response vector
SISO_Shannon limit: using SISO antennas, and precoding data streams according to the existing noise channel side code theorem
500,502,504: line segment
DCT-based_codebook: precoding data streams according to the DCT codebook of the present invention
DFT-based_codebook: precoding data streams according to the DFT
Array_response_vector_codebook: precoding data streams according to the array response vector

## Claims

1. A method for generating a codebook based on a discrete cosine transform, suitable for an electronic device with a plurality of antennas, comprising:

   generating an identity matrix; wherein the size of the identity matrix is related to the number of antennas of the electronic device;
   inputting a plurality of column vectors of the identity matrix into a discrete cosine transform formula to calculate a plurality of codeword elements corresponding to the column vectors;
   generating a plurality of codewords corresponding to the column vectors; wherein the codewords corresponding to the column vectors comprise the codeword elements corresponding to the column vectors;
   multiplying the codewords by a coefficient related to the number of antennas;
   determining whether the calculation of all the codewords has been completed; and
   completing the codebook.

2. The method as claimed in claim 1, wherein the discrete cosine transform formula is:

$$X_{i,k} = \frac{1}{2}\left(x_{i,0} + (-1)^k x_{i,N-1}\right) + \sum_{n=1}^{N-2} x_{i,n} \cos\left[\frac{\pi kn}{N-1}\right] ;$$

or

$$X_{i,k} = \sum_{n=0}^{N-1} x_{i,n} \cos\left[\frac{\pi k(2n+1)}{2N}\right] ;$$

wherein $N$ is the number of antennas of the electronic device; $X_{i,k}$ is the i-th codeword element of the k-th codeword; $k$ is the index of the codewords, $k = 0,1, 2,..., N - 1$; i is the index of the codeword elements in one of the codewords, $i = 0, 1, 2, ..., N - 1$; $x_{i,n}$ is the element in the n-th column and i-th row of the identity matrix.

3. The method as claimed in claim 1 or 2, wherein the coefficient related to the number of antennas is:

$$C = \frac{1}{\sqrt{N}}$$

wherein C is the coefficient, and $N$ is the number of antennas of the electronic device.

4. The method as claimed in claim 2, wherein the step of determining whether the calculation of all the codewords has been completed, comprises:
determining that the calculation of all the codewords has been completed when $k$ is equal to $N - 1$ and the calculation for i = 0~$N$ - 1 is completed.

5. The method as claimed in any of claims 1 to 4, further comprising:

using a matching algorithm to select a codeword in the codebook based on a discrete cosine transform;
using the codeword to generate a radio frequency precoding matrix; wherein the codeword is used as a column vector of the radio frequency precoding matrix;
encoding radio frequency signals transmitted by the antennas of the electronic device based on the radio frequency precoding matrix; and
transmitting the radio frequency signals through the antennas of the electronic device.

6. The method as claimed in claim 5, wherein the matching algorithm is an Orthogonal Matching Pursuit (OMP) algorithm.

7. The method as claimed in claim 5 or 6, wherein the matching algorithm selects the codeword based on channel state information between the electronic device and another electronic device.

8. The method as claimed in any of claims 1 to 7, further comprising:

calculating the least square value of the codeword to generate a baseband precoding matrix; wherein the codeword after taking the least square value is used as a column vector of the baseband precoding matrix; and
precoding baseband digital signals based on the baseband precoding matrix.

9. An electronic device, comprising:

a plurality of antennas, configured to transmit radio frequency signals; and
a processor, configured to execute the following steps:

generating an identity matrix; wherein the size of the identity matrix is related to the number of antennas of the electronic device;

inputting a plurality of column vectors of the identity matrix into a discrete cosine transform formula to calculate a plurality of codeword elements corresponding to the column vectors;

generating a plurality of codewords corresponding to the column vectors; wherein the codewords corresponding to the column vectors comprise the codeword elements corresponding to the column vectors;

multiplying the codewords by a coefficient related to the number of antennas;

determining whether the calculation of all the codewords has been completed; and

completing the codebook;

wherein the processor controls the antennas to transmit the radio frequency signals.

10. The electronic device as claimed in claim 9, wherein the processor is further configured to execute the following steps:

using a matching algorithm to select a codeword in the codebook based on a discrete cosine transform;

using the codeword to generate a radio frequency precoding matrix; wherein the codeword is used as a column vector of the radio frequency precoding matrix;

encoding radio frequency signals transmitted by the antennas of the electronic device based on the radio frequency precoding matrix; and

transmitting the radio frequency signals through the antennas of the electronic device.

11. The electronic device as claimed in claim 10, wherein the matching algorithm is an Orthogonal Matching Pursuit (OMP) algorithm; the matching algorithm selects the codeword based on channel state information between the electronic device and another electronic device.

12. The electronic device as claimed in any of claims 9 to 11, wherein the processor is further configured to execute the following steps:

calculating the least square value of the codeword to generate a baseband precoding matrix; wherein the codeword after taking the least square value is used as a column vector of the baseband precoding matrix; and

precoding baseband digital signals based on the baseband precoding matrix.

13. The electronic device as claimed in any of claims 9 to 12, wherein the discrete cosine transform formula is:

$$X_{i,k} = \frac{1}{2}\left(x_{i,0} + (-1)^k x_{i,N-1}\right) + \sum_{n=1}^{N-2} x_{i,n} \cos\left[\frac{\pi k n}{N-1}\right] \; ;$$

or

$$X_{i,k} = \sum_{n=0}^{N-1} x_{i,n} \cos\left[\frac{\pi k (2n+1)}{2N}\right] \; ;$$

wherein $N$ is the number of antennas of the electronic device; $X_{i,k}$ is the i-th codeword element of the k-th codeword; $k$ is the index of the codewords, $k = 0, 1, 2, ..., N - 1$; i is the index of the codeword elements in one of the codewords, $i = 0, 1, 2, ..., N - 1$; $x_{i,n}$ is the element in the n-th column and i-th row of the identity matrix.

14. The electronic device as claimed in any of claims 9 to 13, wherein the coefficient related to the number of antennas is:

$$C = \frac{1}{\sqrt{N}}$$

wherein C is the coefficient, and $N$ is the number of antennas of the electronic device.

15. The electronic device as claimed in claim 13, wherein when $k$ is equal to $N - 1$ and the processor has finished the calculation for i = 0~$N - 1$, the processor determines that the calculation of all the codewords has been completed.

generating an identity matrix; wherein the size of the identity matrix is related to the number of the antennas of the electronic device — S100

inputting a plurality of column vectors of the identity matrix into a discrete cosine transform formula to calculate a plurality of codeword elements corresponding to the column vectors — S102

generating a plurality of codewords corresponding to the column vectors; wherein the codewords corresponding to the column vectors comprises the codeword elements corresponding to the column vectors — S104

multiplying the codewords by a coefficient related to the number of the antennas — S106

S108

determining whether the calculation of all the codewords has been completed — No

Yes

completing the codebook — S110

FIG. 1

200

202

212
channel state information

210
DCT codebook

218

214

216

OMP

least square ← codeword matching

222 — baseband precoding matrix

radio frequency precoding matrix

224

220

228    230

226 — baseband digital precoding

$N_S$

$N_{TRF}$

radio frequency precoding

$N_T$

204

FIG. 2

FIG. 3

# FIG. 4

spectrum efficiency (bits/s/Hz)

SNR(dB)

| Legend | |
|---|---|
| —⊖— SISO Shannon limit | 412 |
| —▽— MIMO 2-stream Array response vector codebook | 410 |
| ---□--- MIMO 1-stream Array response vector codebook | 408 |
| ---◇--- MIMO 2-stream DFT-based codebook | 406 |
| ---△--- MIMO 1-stream DFT-based codebook | 404 |
| —◇— MIMO 2-stream DCT-based codebook | 402 |
| —○— MIMO 1-stream DCT-based codebook | 400 |

FIG. 5

EP 4 195 524 A1

**EUROPEAN SEARCH REPORT**

Application Number

EP 21 21 7214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/294853 A1 (MOCHIDA EIJI [JP] ET AL) 11 October 2018 (2018-10-11) | 1-5, 8-10, 12-15 | INV. H04B7/0456 |
| Y | * paragraph [0117] - paragraph [0138] *<br>* paragraph [0203] - paragraph [0205] *<br>* figures 2, 3, 10 * | 6,7,11 | |
| Y | KIM MINHYUN ET AL: "MSE-Based Hybrid RF/Baseband Processing for Millimeter-Wave Communication Systems in MIMO Interference Channels",<br>IEEE TRANSACTIONS ON VEHICULAR TECHNOLOGY, IEEE, USA,<br>vol. 64, no. 6, 1 June 2015 (2015-06-01),<br>pages 2714-2720, XP011584678,<br>ISSN: 0018-9545, DOI:<br>10.1109/TVT.2014.2346400<br>[retrieved on 2015-06-16] | 6,7,11 | |
| A | * Sections III-A and III-B;<br>page 2716 - page 2717; figure 2 * | 1-5, 8-10, 12-15 | |

TECHNICAL FIELDS
SEARCHED (IPC)

H04B

The present search report has been drawn up for all claims

| Place of search | Date of completion of the search | Examiner |
|---|---|---|
| Munich | 3 June 2022 | Vucic, Nikola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 21 21 7214

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | Publication date |
|---|---|---|---|---|---|
| US 2018294853 A1 | | 11-10-2018 | JP | 6536159 B2 | 03-07-2019 |
| | | | JP | 2016105573 A | 09-06-2016 |
| | | | US | 2018294853 A1 | 11-10-2018 |

EPO FORM P0459

For more details about this annex : see Official Journal of the European Patent Office, No. 12/82